(19) Europäisches Patentamt
European Patent Office
Office européen des brevets

(11) Veröffentlichungsnummer: **0 004 305**
**B1**

(12) # EUROPÄISCHE PATENTSCHRIFT

(45) Veröffentlichungstag der Patentschrift: **11.11.81**

(51) Int. Cl.$^3$: **C 01 B 25/043**

(21) Anmeldenummer: **79100637.2**

(22) Anmeldetag: **05.03.79**

(54) **Stabilisierter roter Phosphor.**

(30) Priorität: **25.03.78 DE 2813151**

(43) Veröffentlichungstag der Anmeldung:
**03.10.79 Patentblatt 79/20**

(45) Bekanntmachung des Hinweises auf die Patenterteilung:
**11.11.81 Patentblatt 81/45**

(84) Benannte Vertragsstaaten:
**DE GB IT SE**

(56) Entgegenhaltungen:
**DE - A - 2 622 296**
**DE - A - 2 632 296**
**US - A - 2 200 742**
**US - A - 2 635 953**
**US - A - 3 218 192**

(73) Patentinhaber: **HOECHST AKTIENGESELLSCHAFT**
**Postfach 80 03 20**
**D-6230 Frankfurt/Main 80 (DE)**

(72) Erfinder: **Dany, Franz-Josef, Dr.**
**Kölner Ring 167**
**D-5042 Erftstadt (DE)**
Erfinder: **Thümmler, Ursus, Dr.**
**Am Kappellenbusch 27**
**D-5042 Erftstadt (DE)**
Erfinder: **Wortmann, Joachim, Dr.**
**Platanen-Allee 11**
**D-5014 Kerpen-Türnich (DE)**
Erfinder: **Staendeke, Horst, Dr.**
**Von-Meer-Strasse 15**
**D-5042 Erftstadt (DE)**
Erfinder: **Kandler, Joachim, Dr.**
**Amselweg 10**
**D-5042 Erftstadt (DE)**

**EP 0 004 305 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Stabilisierter roter Phosphor

Die Erfindung betrifft stabilisierten roten Phosphor, wobei roter Phosphor in wässeriger Suspension durch Auffällen eines Gemisches von Aluminiumhydroxid und einem weiteren Metallhydroxid behandelt wird.

Bekanntlich findet in feuchter Atmosphäre an der Oberfläche von rotem Phosphor eine chemische Reaktion statt, bei der durch Oxidation und Disproportionierung verschiedene Säuren des Phosphors der Oxidationsstufen +1 bis +5 und Phosphorwasserstoff gebildet werden.

Zur Stabilisierung des roten Phosphors wird gemäß Gmelins Handbuch der Anorganischen Chemie, 8. Aufl. (1964), Band Phosphor, Teil B, Seite 83, Verlag Chemie, Weinheim/Bergstrasse Aluminiumhydroxid vorgeschlagen. Letzteres wird durch aufeinander folgenden Zusatz von 55—60°C erwärmten wässerigen 10 Gew%igen Lösungen von Natriumhydrogencarbonat und Aluminiumsulfat auf den Phosphorteilchen ausgefällt. Die wässerige Suspension wird dann filtriert und der Filterrückstand getrocknet. Auf diese Weise wird im allgemeinen ein Stabilisierungsgrad des roten Phosphors erreicht, der für die meisten Anwendungsgebiete ausreichend ist. Diese Verfahrensweise besitzt jedoch den Nachteil, daß durch das Auffällen von Aluminiumhydroxid die Suspension eine schleimige Konsistenz erhält, so daß das Filtrieren der Suspension mit Schwierigkeiten verbunden ist. Außerdem weist der gewonnene Filterkuchen einen sehr hohen Restwassergehalt auf, bedingt durch das hohe Wasserrückhaltevermögen des Aluminiumhydroxids, wodurch die Trocknung sowohl im Hinblick auf die aufzuwendende Energie als auch die Trocknungszeit zusätzlich erschwert wird.

Weiterhin ist in der US-Patentschrift 2 635 953 die Stabilisierung von rotem Phosphor mit Gemischen aus Aluminiumhydroxid und Zink- oder Magnesiumhydroxid beschrieben. Auch beim Einsatz dieser Hydroxide wurde entweder eine schlechte Filtrierbarkeit der phosphorhaltigen Suspension oder aber eine unbefriedigende Stabilität des so ausgerüsteten roten Phosphors beobachtet.

Schließlich wird in den DE—A 2 622 296 und 2 632 296 das Auffällen von Salzen von sauren Orthophosphorsäure-Estern bzw. von Phosphonsäuren auf roten Phosphor zwecks Stabilisierung vorgeschlagen, wobei die Kationen vorgenannter Verbindungen Elemente der 2. und 3. Gruppe des Periodensystems sind. Hierbei erhält der rote Phosphor zwar eine hervorragende Oxidationsstabilität, jedoch sind derartige Stabilisatoren gegenüber Stabilisatoren auf Basis von Aluminiumhydroxid unverhältnismäßig teuer.

Es wurde nunmehr überraschend gefunden, daß die Nachteile der bekannten Stabilisatoren nicht und auftreten, wenn man den pulverförmigen roten Phosphor mit einem Gemisch aus Aluminiumhydroxid und Bleihydroxid stabilisiert.

Somit betrifft die Erfindung stabilisierten, pulverförmigen roten Phosphor, bestehend aus einem homogenen Gemisch von rotem Phosphor mit einer Teilchengröße von höchstens etwa 2 mm, Aluminiumhydroxid und einem weiteren Metallhydroxid als Oxidationsstabilisatoren, welcher dadurch gekennzeichnet ist, daß das Metallhydroxid Bleihydroxid ist, wobei Aluminiumhydroxid und Bleihydroxid in dem homogenen Gemisch in einer Gesamtmenge von etwa 0,1—6 Gew%, bezogen auf die Menge des roten Phosphors, enthalten sind und das Gewichtsverhältnis von Aluminiumhydroxid zu Bleihydroxid, berechnet als $Al_2O_3$ zu PbO, etwa 0,5 bis 2,0 beträgt.

Die Teilchengröße des roten Phosphors beträgt vorzugsweise etwa 0,01—0,15 mm. Es erwies sich weiterhin als Vorteil, die Gesamtmenge des Aluminiumhydroxids und Bleihydroxids in dem homogenen Gemisch auf 0,4—2,0 Gew%, bezogen auf die Menge des roten Phosphors, zu bemessen und ein Gewichtsverhältnis der Metallhydroxide, berechnet als $Al_2O_3$ zu PbO, von 0,7—1,3 einzuhalten.

Die Herstellung des erfindungsgemäß stabilisierten roten Phosphors kann beispielsweise derart erfolgen, daß man in eine wässerige Suspension des roten Phosphors unter Rühren wässerige Lösungen der erforderlichen Mengen eines Aluminium- und Bleisalzes einträgt und durch Zugabe von Natronlauge Aluminium- und Bleihydroxid ausfällt. Die Suspension wird dann bei 80°C 1 Stunde gerührt, filtriert und der Filterrückstand im Stickstoffstrom bei 110°C getrocknet.

Bei der Herstellung des stabilisierten roten Phosphors wurde festgestellt, daß sich die wässerige Suspension des roten Phosphors in Verbindung mit den ausgefällten Hydroxiden wesentlich schneller filtrieren läßt, als eine entsprechende, bleihydroxidfreie Suspension. Abgesehen von dem Vorteil, der leichten Filtrierbarkeit wurde überraschend festgestellt, daß in Anwesenheit von Bleihydroxid als zusätzliche Stabilisatorkomponente, welche allein nicht stabilisierend auf den roten Phosphor wirkt, der Stabilisatoreffekt des Aluminiumhydroxids in Bezug auf die unerwünschte Phosphinbildung bei der Lagerung des roten Phosphors in feuchter Atmosphäre erheblich verbessert wird.

Es ist bekannt, daß bei Verwendung von Kupfer-Verbindungen, wie z.B. Kupferhydroxid oder Kupferoxid, vorerwähnte Phosphinentwicklung nahezu vollständig unterbunden werden kann. Kupferverbindungen haben jedoch den Nachteil, daß sie die Oxidation des roten Phosphors sehr stark beschleunigen und ein auf diese Weise stabilisierter roter Phosphor unter Einwirkung von Luft sehr bald eine pastenförmige bis flüssige Konsistenz annimmt.

Der gemäß Erfindung stabilisierte rote Phosphor zeichnet sich durch eine Oxidationsstabilität aus, die der des Aluminiumhydroxids mindestens gleichwertig ist. Darüberhinaus ergibt sich eine wesentlich geringere Phosphinentwicklungsrate als bei der Stabilisierung mit ausschließlich Aluminiumhydroxid. Die Reduzierung der Phosphinentwicklung ist bei der Stabilisierung von rotem Phosphor besonders wichtig, da Phosphin bereits in geringen Konzentrationen außerordentlich gesundheitsschädigend ist. Außerdem ist Phosphin immer mit selbstentzündlichem Diphosphan bzw. Polyphosphanen vergesellschaftet, wodurch Brand- bzw. Explosionsgefahr besteht.

In den nachfolgenden Beispielen wird erläutert, in welchem Ausmaß Magnesiumhydroxid, Aluminiumhydroxid, Kupferhydroxid oder Bleihydroxid sowie entsprechende Gemische wässerige Suspensionen von rotem Phosphor stabilisieren. In der Tabelle sind die dabei erzielten Ergebnisse zusammengefaßt. Hierbei werden in den Spalten 2—5 die Mengen der auf den roten Phosphor aufgefällten Hydroxide, berechnet als Oxide, angegeben und in den Spalten 6 und 7 die unter definierten Bedingungen entwickelten Mengen Phosphorsäure als $H_3PO_4$ bzw. Phosphin. Die Spalte 8 gibt die Zeit an, die für die Filtration des jeweiligen Ansatzes notwendig war und die Spalte 9 den Wassergehalt des jeweils erhaltenen Filterkuchens.

Beispiel 1 (Vergleichsbeispiel)

Ein Edelstrahlreaktor mit einem Inhalt von 25 l wurde mit 6 kg rotem Phosphor mit einer Korngröße von 5 bis 100 μm und 9 l Wasser beschickt. Unter ständigem Rühren des Gemisches wurden 181,5 g $MgCl_2 \times 6\ H_2O$, entsprechend 0,6 Gewichtsteile MgO auf 100 Gewichtsteile P in Form einer 30 gewichtsprozentigen Lösung eingebracht. Anschließend wurde in das Gemisch so lange eine wässerige 20 gewichtsprozentige Natriumhydroxid-Lösung zugetropft, bis der pH-Wert der Suspension 9,0 betrug.

Die Suspension wurde noch 1 Std. bei 80°C gerührt und anschließend filtriert. Zur Filtration wurde ein Labor-Vakuumdrehfilter mit folgenden technischen Daten verwendet: Trommeldurchmesser: 31 cm; Breite der Filtrationsfläche: 11 cm; 0,7 UpM. Die benötigte Filtrationszeit wurde ermittelt und der Wassergehalt des Filterkuchens bestimmt. Die Trocknung des Filterkuchens erfolgte im Stickstoffstrom bei 110°C im Verlauf von 15 Stunden.

Beispiel 2 (Vergleichsbeispiel)

Es wurde analog Beispiel 1 verfahren, wobei anstelle des Magnesiumchlorids 235,3 g $Al_2(SO_4)_3 \times 18\ H_2O$, entsprechend 0,6 Gewichtsteile $Al_2O_3$ auf 100 Gewichtsteile P, als 40 gewichtsprozentige wässerige Lösung eingesetzt wurden.

Beispiel 3 (Vergleichsbeispiel)

Es wurde analog Beispiel 1 verfahren, wobei anstelle des Magnesiumchlorids 153,5 g $CuSO_4 \times 5\ H_2O$, entsprechend 0,815 Gewichtsteile CuO auf 100 Gewichtsteile P, als 20 gewichtsprozentige wässerige Lösung eingesetzt wurden.

Beispiel 4 (Vergleichsbeispiel)

Es wurde analog Beispiel 1 verfahren, wobei anstelle des Magnesiumchlorids 94,3 g Pb $(CH_3—COO)_2 \times 3\ H_2O$, entsprechend 0,925 Gewichtsteile PbO auf 100 Gewichtsteile P, als 40 gewichtsprozentige wässerige Lösung eingesetzt wurden.

Beispiel 5 (Vergleichsbeispiel)

Es wurde analog Beispiel 1 verfahren, wobei zusätzlich zu dem $MgCl_2 \times 6\ H_2O$ 153,5 g $CuSO_4 \times 5\ H_2O$, entsprechend 0,815 Gewichtsteile CuO auf 100 Gewichtsteile P, als 20 gewichtsprozentige wässerige Lösung eingesetzt wurden.

Beispiel 6 (Vergleichsbeispiel)

Es wurde analog Beispiel 1 verfahren, wobei zusätzlich zu dem $MgCl_2 \times 6\ H_2O$ 94,3 g Pb $(CH_3—COO)_2 \times 3\ H_2O$, entsprechend 0,925 Gewichtsteile PbO auf 100 Gewichtsteile P, als 40 gewichtsprozentige wässerige Lösung eingesetzt wurden.

Beispiel 7 (Vergleichsbeispiel)

Es wurde analog Beispiel 1 verfahren, wobei anstelle des Magnesiumchlorids 235,3 g $Al_2(SO_4)_3 \times 18\ H_2O$ und 153,5 g $CuSO_4 \times 5\ H_2O$, entsprechend 0,815 Gewichtsteile CuO und 0,6 Gewichtsteile $Al_2O_3$ pro 100 Gewichtsteile P, in Form ihrer wässerigen Lösungen eingesetzt wurden. Die Konzentration der $CuSO_4 \times 5\ H_2O$-Lösung betrug 20 Gewichts%, die der $Al_2(SO_4)_3 \times 18\ H_2O$-Lösung 40 Gewichts%.

Beispiel 8 (Erfindung)

Es wurde analog Beispiel 1 verfahren. Anstelle des Magnesiumchlorids wurden jeweils 40 gewichtsprozentige wässerige Lösungen der Al- bzw. Pb-Salze eingesetzt:

a) 235 g $Al_2(SO_4)_3 \times 18\ H_2O$ und 94,3 g Pb $(CH_3—COO)_2 \times 3\ H_2O$, entsprechend 0,6 Gewichtsteile $Al_2O_3$ und 0,925 Gewichtsteile PbO pro 100 Gewichtsteile P

b) 784,4 g $Al_2(SO_4)_3 \times 18\ H_2O$ und 188,7 g Pb $(CH_3—COO)_2 \times 3\ H_2O$, entsprechend 1,85 Gewichtsteile PbO und 2,0 Gewichtsteile $Al_2O_3$ pro 100 Gewichtsteile P

Zur Prüfung der Oxidationsstabilität des roten Phosphors wurde ein modifiziertes Verfahren nach Indian Standard "Specification for red phosphorus" IS: 2012—1961 angewendet, welches im folgenden erläutert wird:

a) Konditionierung der Proben
Es wurden jeweils 25 g stabilisierter roter Phosphors auf einem Uhrglas gleichmäßig verteilt und in einem Exsikkator über gesättigter wässeriger Ammonsulfat-Lösung, entsprechend einer relativen Luftfeuchte von ca. 72%, bei 50°C 28 Tage gelagert. Der Exsikkator befand sich während dieser Zeit in einem Trockenschrank bei einer Temperatur von 50°C.

b) Phosphinbestimmung
Zur Bestimmung des gebildeten Phosphins $PH_3$ wurde das im Exsikkator befindliche Gasvolumen durch Verdrängung mit Stickstoff in zwei hintereinander geschaltete Gaswaschflaschen, die mit 5 gewichtsprozentiger Quecksilber-II-Chlorid-Lösung gefüllt waren, übergetrieben. Das übergetriebene Phosphin reagiert hierbei unter Bildung von unlöslichem $P(HgCl)_3$, das mit Jod entsprechend folgender Gleichung oxidiert wurde:

$$P(HgCl)_3 + 4\ J_2 + 4\ H_2O \rightarrow H_3PO_4 + 3HgJ_2 + 2\ HJ + 3\ HCl$$

Der Überschuß an Jod wurde durch Titration mit einer Natriumthiosulfat-Lösung ermittelt. 1 ml verbrauchte 0,1 n Jod-Lösung entspricht 0,4255 mg $PH_3$ (Verfahren nach Beyer, Handbuch, Analytische Chemie, Teil III, Band V a, Seite 353, Springer-Verlag 1953).

c) Bestimmung der Oxidationsrate (Acidität)
5 g des konditionierten roten Phosphors wurden in 100 ml $H_2O$ aufgeschlämmt und zum Sieden erhitzt. Der Phosphor wurde abfiltriert und mehrmals mit heißem Wasser ausgewaschen. Das Filtrat wurde mit 15 g NaCl versetzt und gegen Phenophthalein mit 0,1 n Natronlauge titriert.
1 ml 0,1 n NaOH entspricht 4,9 mg $H_3PO_4$.

Die auf vorbeschriebene Weise ermittelten $PH_3$- und $H_3PO_4$-Werte wurden auf 1 g eingesetzten roten Phosphor umgerechnet.

Aus der Tabelle geht hervor, daß bei Verwendung des erfindungsgemäßen Stabilisator-Gemisches für roten Phosphor die Phosphinentwicklung im Vergleich zu anderen bekannten Stabilisatoren bzw. Stabilisatorgemischen- wenn man von den kupferhaltigen Stabilisatoren absieht — stark zurückgedrängt wird. Kupferhaltige Verbindungen scheiden jedoch — wie bereits erwähnt — für die Stabilisierung aus, weil sie die Oxidation des roten Phosphors an der Luft in dem Maße fördern, daß eine Masse mit zerfließlicher Konsistenz entsteht.

Im Hinblick auf die Oxidationsstabilität liefert das erfindungsgemäße Stabilisatorgemisch mindestens ebenso gute Werte wie Aluminiumhydroxid allein, aber beträchtlich bessere Werte als die anderen bekannten Hydroxide bzw. Hydroxid-Gemische.

Die Filtrationszeit und der Wassergehalt des Phosphor-Filterkuchens werden beim Einsatz des erfindungsgemäßen Stabilisatorengemisches entscheidend verbessert.

TABELLE

| Beispiel | MgO | $Al_2O_3$ (g / 100 g P) | CuO | PbO | $H_3PO_4$ (mg / g P) | $PH_3$ | Filtrationszeit (min) | $H_2O$-Gehalt (Gew %) |
|---|---|---|---|---|---|---|---|---|
| 1 | 0,6 | – | – | – | 107,6 | 0,73 | 55 | 17,7 |
| 2 | – | 0,6 | – | – | 66,3 | 0,18 | > 70 | 22,1 |
| 3 | – | – | 0,815 | – | 220,4 | 0,04 | 58 | 18,8 |
| 4 | – | – | – | 0,925 | 122,5 | 1,34 | 51 | 17,0 |
| 5 | 0,6 | – | 0,815 | – | 154,3 | 0,03 | 54 | 19,1 |
| 6 | 0,6 | – | – | 0,925 | 110,7 | 0,77 | 50 | 17,8 |
| 7 | – | 0,6 | 0,815 | – | 159,9 | 0,01 | > 70 | 22,3 |
| 8 a) | – | 0,6 | – | 0,925 | 63,4 | 0,08 | 15 | 14,4 |
| 8 b) | – | 2,0 | – | 1,850 | 57,1 | 0,05 | 19 | 16,8 |

**Patentansprüche**

1. Stabilisierter, pulverförmiger roter Phosphor, bestehend aus einem homogenen Gemisch von rotem Phosphor mit einer Teilchengröße von höchstens etwa 2 mm, Aluminiumhydroxid und einem weiteren Metallhydroxid als Oxidationsstabilisatoren, welcher dadurch gekennzeichnet ist, daß das Metallhydroxid Bleihydroxid ist, wobei Aluminiumhydroxid und Bleihydroxid in dem homogenen Gemisch in einer Gesamtmenge von etwa 0,1—6 Gew%, bezogen auf die Menge des roten Phosphors, enthalten sind und das Gewichtsverhältnis von Aluminiumhydroxid zu Bleihydroxid, berechnet als $Al_2O_3$ zu PbO, etwa 0,5 bis 2,0 beträgt.

2. Roter Phosphor gemäß Anspruch 1, dadurch gekennzeichnet, daß seine Teilchengröße etwa 0,01 bis 0,15 mm beträgt.

3. Roter Phosphor gemäß Anspruch 1 oder 2, dadurch gekennzeichnet, daß Aluminiumhydroxid und Bleihydroxid in dem homogenen Gemisch in einer Gesamtmenge von 0,4—2,0 Gew%, bezogen auf die Menge des roten Phosphors, enthalten sind.

4. Roter Phosphor gemäß Anspruch 1—3, dadurch gekennzeichnet, daß das Gewichtsverhältnis von Aluminiumhydroxid zu Bleihydroxid, berechnet als $Al_2O_3$ zu PbO, 0,7—1,3 beträgt.

**Claims**

1. Stabilized pulverulent red phosphorus consisting of a homogeneous blend of red phosphorus particles with a size of at most about 2 mm, aluminium hydroxide and a further metal hydroxide as oxidation stabilizers, characterized in that the metal hydroxide is lead hydroxide, the homogeneous blend containing aluminium hydroxide and lead hydroxide in a total proportion of about 0.1 to 6 weight %, based on the quantity of red phosphorus, the aluminium hydroxide and lead hydroxide, calculated as $Al_2O_3$ to PbO, being used in an quantitative ratio of about 0.5 to 2.0.

2. Red phosphorus as claimed in claim 1, characterized in that the particles have a size of about 0.01 to 0.15 mm.

3. Red phosphorus as claimed in claim 1 or 2, characterized in that the homogeneous blend contains aluminium hydroxide and lead hydroxide in a total proportion of 0.4 to 2.0 weight %, based on the quantity of red phosphorus.

4. Red phosphorus as claimed in any of claims 1 to 3, characterized in that the quantitative ratio of aluminium hydroxide to lead hydroxide, calculated as $Al_2O_3$ to PbO, is 0.7 to 1.3.

**Revendications**

1. Phosphore rouge pulvérulent stabilisé constitué par un mélange homogène de phosphore rouge d'une granulométrie maximale d'environ 2 mm, d'hydroxyde d'aluminium et d'un hydroxyde métallique supplémentaire comme stabilisants d'oxydation, caractérisé en ce que l'hydroxyde métallique est l'hydroxyde de plomb, l'hydroxyde d'aluminium et l'hydroxyde de plomb étant contenus dans le mélange homogène en quantité globale d'environ 0,1 à 6% en poids, par rapport à la quantité de phosphore rouge, et l'hydroxyde d'aluminium et l'hydroxyde de plomb, calculés en $Al_2O_3$ à PbO, étant utilisés dans un rapport pondéral d'environ 0,5 à 2,0.

2. Phosphore rouge selon la revendication 1, caractérisé qu'il présente une granulométrie d'environ 0,01 à 0,15 mm.

3. Phosphore rouge selon la revendication 1 ou 2, caractérisé en ce que le mélange homogène contient l'hydroxyde d'aluminium et l'hydroxyde de plomb en quantité globale de 0,4 à 2,0% en poids, par rapport à la quantité de phosphore rouge.

4. Phosphore rouge selon l'une quelconque des revendications 1 à 3, caractérisé en ce que le rapport pondéral d'hydroxyde d'aluminium/hydroxyde de plomb, calculés en $Al_2O_3$ à PbO, est de 0,7 à 1,3.